# EUROPÄISCHE PATENTSCHRIFT

(11) **EP 0 415 225 B1**
(45) Veröffentlichungstag und Bekanntmachung des Hinweises auf die Patenterteilung: **18.03.1998**
(21) Anmeldenummer: 90115916.0
(22) Anmeldetag: 20.08.1990
(51) Int. Cl.: G02F 1/313, G02F 1/025, G02B 6/12, G02F 1/295

(54) **Integriert optische Anordnung mit wenigstens einem auf einem Substrat aus Halbleitermaterial integrierten optischen Wellenleiter**
Integrated optical device with at least one optical waveguide integrated on a semiconductor substrate
Dispositif optique intégré avec au moins un guide optique intégré sur un substrat semi-conducteur

(30) Priorität: 01.09.1989 DE 3929131
(43) Veröffentlichungstag der Anmeldung: 06.03.1991
(73) Patentinhaber: SIEMENS AKTIENGESELLSCHAFT, 80333 München (DE)
(72) Erfinder: Müller, Gustav, Dr., D-8000 München 50 (DE); Stoll, Lothar, Dipl.-Phys., D-8000 München 70 (DE); Wolff, Ulrich, Dipl.-Phys., D-8000 München 72 (DE)

(56) Entgegenhaltungen:
- EP-A- 0 410 531
- FR-A- 2 302 541
- ELECTRONICS LETTERS, Bd. 20, Nr. 19, September 1984, Stevenage, GB, SS 790-792; M. FUJIWARA et al.: 'GigaHertz-Bandwidth InGaAsP/InP Optical Modulators/Switches with Double-Hetero Waveguides'
- ELECTRONICS LETTERS, Bd. 26, Nr. 2, 18. Januar 1990, Stevenage, GB, SS 115-117; G. MÜLLER et al.: 'Low current plasma effect optical switch on InP'
- JOURNAL OF THE INSTITUTION OF ELECTRONIC AND RADIO ENGINEERS, Bd. 57, Nr. 1, Januar 1987, London, GB, SS 544-550; S. RITCHIE et al.: 'Optical waveguides in III-V semiconductors'

## Beschreibung

Die Erfindung betrifft gemäß dem Oberbegriff des Patentanspruchs 1 eine integriert optische Anordnung mit wenigstens einem auf einem Substrat aus Halbleitermaterial integrierten optischen Wellenleiter, wie sie z.B. aus FR-A-2 302 541 bekannt ist. Eine ähnliche Vorrichtung ist auch aus dem Artikel "Gigahertz-Bandwidth lnGaAsP/lnP Optical Modulators/Switches with Double-Hetero Waveguides" von Fujiwara, M. et al., Electronics Letters 20(19), 790 - 792, (1984) bekannt.

Integriert optische Anordnungen mit auf einem Substrat aus Halbleitermaterial integrierten optischen Wellenleitern sind beispielsweise optische Schalter oder abstimmbare Filter, die Wellenleiter benötigen, in denen die Ausbreitungskonstante des in dem Wellenleiter geführten Modes durch ein elektrisches Signal variiert werden kann. Die Änderung der Ausbreitungskonstante kann aurch die Änderung der effektiven Brechzahl des Wellenleiters entweder durch Injektion von elektrischen Ladungsträgern (plasma effect, siehe IOOC-ECOC, S. 357-360, 1985) oder durch Verwendung eines elektrischen Feldes (electro-optic-effects, siehe SPIE, Vol. 587, S. 180-187, 1985 - siehe auch FR-A-2 302 541) erreicht werden.

Integrierte optische Anordnungen enthalten neben passiven Wellenleitern vielfach elektrisch steuerbare Wellenleiter sowie aktive Bauelemente, wie Laser und Verstärker. Die Herstellung und Verbindung dieser verschiedenen Elemente auf einem gemeinsamen Substrat erschwert die Herstellung solcher integrierten optischen Anordnungen.

Aufgabe der Erfindung ist es, eine integriert optische Anordnung der eingangs genannten Art anzugeben, bei welcher derselbe Wellenleiter sowohl als passiver Wellenleiter verwendbar als auch als elektrisch steuerbarer Wellenleiter betreibbar ist, wobei dieser Wellenleiter überdies verlustarm ist.

Diese Aufgabe wird durch die im kennzeichnenden Teil des Patentanspruchs 1 angegebenen Merkmale gelöst.

Es ist bekannt, daß in optischen Wellenleitern auf Halbleitermaterial Verluste hauptsächlich durch p-dotiertes Material erzeugt werden (siehe IEEE Journ. Quant. Electron. QU-19, S. 947-952, 1983). Bei der erfindungsgemäßen Anordnung ist die wellenleitende Schicht nicht p-dotiert und der Übergang von p-dotiertem zu n-dotiertem oder undotiertem Material ist derart mit Abstand von dieser wellenleitenden Schicht angeordnet, daß das p-dotierte Material auf der von dieser Schicht abgekehrten Seite dieses Übergangs angeordnet ist. Dies hat eine niedrigere Überlappung zwischen dem in der wellenleitenden Schicht geführten optischen Mode und dem verlustbringenden p-dotierten Material und damit eine beträchtliche Reduzierung der Verluste der wellenleitenden Schicht zur Folge.

Der erfindungsgemäße Rippenwellenleiter ist vorteilhafterweise sowohl als verlustarmer passiver Wellenleiter verwendbar, als auch als verlustarmer elektrisch steuerbarer Wellenleiter betreibbar, wenn der pn- bzw. pin-Übergang elektrisch kontaktiert wird. Es läßt sich vorteilhafterweise mit demselben erfindungsgemäßen Rippenwellenleiter eine Kombination aus passivem Wellenleiter und steuerbarem Wellenleiter dadurch herstellen, daß sich der pn-oder pin-Übergang über die ganze Länge der Rippe erstreckt und in einem vorbestimmten Abschnitt dieses Wellenleiters der Übergang von außen mit elektrischen Kontakten versehen wird. Der nicht kontaktierte Abschnitt des Rippenwellenleiters bildet den verlustarmen passiven und der kontaktierte Abschnitt den verlustarmen steuerbaren Wellenleiter, der durch Anlegen eines elektrischen Signals an die Kontakte je nach Polung durch Ladungsträgerinjektion oder durch ein elektrisches Feld steuerbar ist. Dadurch werden die bei der Herstellung integriert optischer Anordnungen mit aktiven Bauelementen, elektrisch steuerbaren Wellenleitern und passiven Wellenleitern notwendigen technischen Erfordernisse entscheidend reduziert.

Der pn-Übergang bzw. pin-Übergang wird im Fall der Ladungsträgerinjektion in die wellenleitende Schicht als eine in Durchlaßrichtung betriebene Diode und im Fall der Ausnutzung des elektrooptischen Effekts als eine in Sperrichtung betriebene Diode verwendet. Damit dies möglich ist, muß die wellenleitende Schicht zwischen den verschieden dotierten Materialien dieses Übergangs angeordnet sein.

Erfindungsgemäß ist der Abstand zwischen dem Übergang vom p- zum n- oder undotierten Material von der wellenleitenden Schicht kleiner als die Diffusionslänge von in diese Schicht zu induzierenden elektrischen Ladungsträgern gewählt. Dieser Abstand hat dann vorteilhafterweise bei Verwendung der Ladungsträgerinjektion keinen wesentlichen Einfluß auf die in die wellenleitende Schicht induzierten Träger. Auch kann dadurch erreicht werden, daß die Verluste in einem Wellenleiter, der in einem geringen seitlichen Abstand von beispielsweise einigen µm von der Rippe parallel zum Rippenwellenleiter verläuft, durch freie Ladungsträger nicht erheblich erhöht werden. Dies ist für die Realisierung von verlustarmen optischen Schaltern, z. B. in Form von integriert optischen Richtkopplern günstig.

Im Fall der Steuerung durch ein elektrisches Feld wird erfindungsgemäß erreicht, daß sich das Feld in dem Bereich zwischen dem Übergang von p- zu n-dotiertem oder undotiertem Material und der wellenleitenden Schicht sowie in diese Schicht selbst erstreckt, wobei es sich gut mit dem in der wellenleitenden Schicht geführten Mode überlappt und daß es sich nur geringfügig, beispielsweise 1 µm, seitlich über den Rand der Rippe hinaus erstreckt, wodurch eine gute räumliche Auflösung für den Entwurf von verlustarmen optischen Schaltern gegeben ist.

Der Einfachheit halber ist das Material der einen Dotierung des Übergangs in der Rippe und das Material der anderen Dotierung zumindest unterhalb der wellenleitenden Schicht im Substrat enthalten. Dies hat den Vorteil, daß zur Kontaktierung des Übergangs die Rippe und das Substrat außen mit elektrischen Kontakten versehen werden können. Bevorzugterweise ist das p-dotierte Material in der Rippe und das n-dotierte Material zumindest unterhalb der wellenleitenden Schicht im Substrat enthalten (Anspruch 2).

Bei einer bevorzugten Ausgestaltung der erfindungsgemäßen Anordnung besteht die Rippe und das Substrat aus InP und die wellenleitende Schicht aus InGaAsP und im Abstand zwischen dem Übergang von p- zu n- oder undotiertem Material und der wellenleitenden Schicht ist InGaAsP mit einer im Vergleich zum Material der wellenleitenden Schicht kleineren Brechzahl enthalten (Anspruch 3). Die erfindungsgemäße Anordnung kann auch in anderen Halbleitermaterialien, beispielsweise im System GaAlAs/GaAs ausgebildet sein.

Mit der erfindungsgemäßen Anordnung lassen sich ausgezeichnet verlustarme optische Schalter realisieren, wenn zwei erfindungsgemäße Rippenwellenleiter verwendet werden, in denen ein geführter optischer Mode adiabatisch von einem Wellenleiter zum anderen gekoppelt wird.

Gemäß einer bevorzugten und als optischer Schalter verwendbaren Ausgestaltung der erfindungsgemäßen Anordnung sind auf dem Substrat zwei abschnittsweise in einem derart geringen Abstand nebeneinander verlaufende Rippenwellenleiter integriert, daß ein in einem Rippenwellenleiter geführter optischer Mode seitlich in den anderen Rippenwellenleiter überkoppeln kann, wobei jeder Rippenwellenleiter durch eine n-dotierte oder undotierte wellenleitende Schicht des Substrats und aus jeweils einer über dieser Schicht ausgebildeten Rippe aus dem Halbleitermaterial besteht, wobei im Bereich jedes Rippenwellenleiters ober- oder unterhalb der wellenleitenden Schicht je ein von außen kontaktierbarer, über die ganze Länge der Rippe sich erstreckender pn- oder pin-Übergang derart integriert ist, daß der Übergang von p- zu n- oder undotiertem Material in einem Abstand von der wellenleitenden Schicht und mit dem p-dotierten Material auf der von dieser Schicht abgekehrten Seite dieses Übergangs angeordnet ist und wobei der pn- oder pin-Übergang wenigstens eines Rippenwellenleiters abschnittsweise kontaktiert ist (Anspruch 4).

Diese Ausgestaltung ist zur Realisierung verlustarmer optischer Schalter in Form von integriert optischen Richtkopplern und in Form von integriert optischen Mach-Zehnder-Interferometern hervorragend geeignet. Beim Richtkoppler muß der pn-oder pin-Übergang wenigstens eines Rippenwellenleiters im Koppelbereich zur elektrischen Steuerung kontaktiert sein. Beim Mach-Zehnder-Interferometer, das einen zwischen zwei 3dB-Richtkopplern angeordneten Phasenschieberbereich aufweist, können Kontakte sowohl im Bereich der Koppler als auch im Phasenschieberbereich angebracht werden.

Eine erfindungsgemäße Anordnung mit einem oder einer Struktur aus mehreren Wellenleitern läßt sich auf einfache Weise dadurch herstellen, daß ein Ausgangskörper in Form eines Substrats aus n-dotiertem Halbleitermaterial, auf dem eine n-dotierte oder undotierte wellenleitende Schicht, darauf eine n-dotierte oder undotierte Abstandsschicht und darauf eine Schicht aus p-dotiertem Halbleitermaterial aufgebracht sind, verwendet wird, daß die p-dotierte Schicht bis auf die Abstandsschicht derart abgetragen wird, daß eine oder mehrere Rippen aus p-dotiertem Material stehenbleiben, welche den oder die Struktur aus Rippenwellenleitern definieren, daß die Rippen mit einer elektrisch isolierenden Schicht abgedeckt werden, in der für jede zu kontaktierende Rippe ein Kontaktfenster ausgespart wird, und daß auf die Rippen eine elektrische Kontaktelektrode aufgebracht wird, die eine auf dem n-dotierten Substrat aufgebrachte Gegenkontaktelekrode hat (Anspruch 5).

Die Erfindung wird in der nachfolgenden Beschreibung anhand der Figuren beispielhaft näher erläutert. Es zeigen:
- Figur 1: eine Draufsicht auf eine schematisch dargestellte erfindungsgemäße Anordnung in Form eines integriert optischen Richtkopplers, der als optischer Schalter verwendbar ist,
- Figur 2: die erfindungsgemäße Anordnung nach Figur 1 in derselben Darstellung, aber im umgeschalteten Zustand,
- Figur 3: eine Draufsicht auf eine schematisch dargestellte erfindungsgemäße Anordnung in Form eines integriert optischen Mach-Zehnder-Interferometers, das ebenfalls als optischer Schalter verwendbar ist,
- Figur 4: einen Querschnitt durch die Anordnung nach Figur 1 längs der Linie III - III, die detailliert den Aufbau der erfindungsgemäßen Rippenwellenleiter und die Lage des pn- bzw. pin-Übergangs in Bezug auf die wellenleitende Schicht zeigt, und
- die Figuren 5a bis 5c: bruchstückhaft und im Querschnitt einen Ausgangskörper, eine Zwischenstufe bzw. eine Endstufe, wie sie bei der Herstellung einer erfindungsgemäßen Anordnung mit einem Rippenwellenleiter und einem pn-bzw. pin-Übergang entstehen.

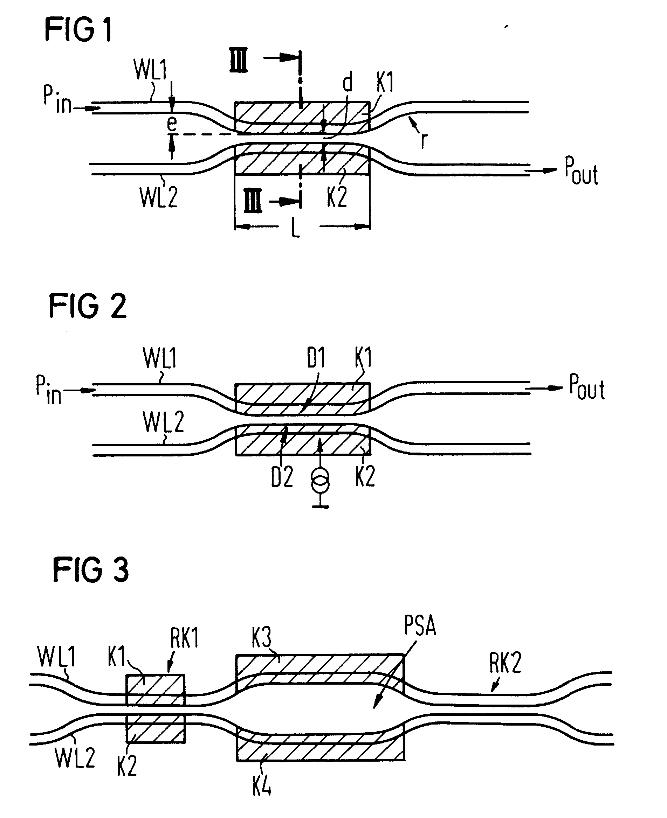

Der integriert optische Richtkoppler nach Figur 1 und 2 besteht in allgemein bekannter Weise aus den beiden integrierten optischen Wellenleitern WL1 und WL2, die in einem Koppelbereich L in einem so geringen Abstand d nebeneinander verlaufen, daß in diesem Bereich L ein geführter optischer Mode von einem zum anderen Wellenleiter überkoppeln kann. Durch elektrisch gesteuerte Variation der effektiven Brechzahl wenigstens eines Wellenleiters kann ein solcher Richtkoppler bekanntermaßen als optischer Schalter betrieben werden.

Die Besonderheit dieses Richtkopplers liegt darin, daß die Wellenleiter WL1 und WL2 erfindungsgemäße Rippenwellenleiter mit jeweils einem über die ganze Länge der betreffenden Rippe sich erstreckenden pn- oder pin-Übergang sind, der im Koppelbereich L elektrisch kontaktiert ist. Beide Rippenwellenleiter sind beispielsweise so dimensioniert, daß sie die gleiche effektive Brechzahl haben, und die Länge des Koppelbereichs L ist so gewählt, daß eine in einem Wellenleiter, z.B. den Wellenleiter WL1, eingekoppelte Lichtleistung Pᵢₙ im Koppelbereich L vollständig in den anderen Wellenleiter WL2 überkoppelt und aus diesem als Ausgangsleistung Pₒᵤₜ entnehmbar ist (siehe Figur 1).

Durch Anlegen eines bestimmten elektrischen Signals an die Kontaktelektrode K2 des Wellenleiters WL2 wird die effektive Brechzahl des betreffenden Wellenleiters WL2 ladungsträger- oder feldinduziert soweit verändert, daß keine Überkopplung der Eingangsleistung Pᵢₙ vom Wellenleiter WL1 in den Wellenleiter WL2 stattfindet. In diesem Fall ist die Eingangsleistung Pᵢₙ dem Wellenleiter WL1 als Ausgangsleistung Pₒᵤₜ entnehmbar und dadurch der Richtkoppler in den anderen Schaltzustand umgeschaltet (Figur 2).

Das in der Figur 3 dargestellte integriert optische Mach-Zehnder-Interferometer besteht aus zwei 3dB-Richtkopplern RK1 und RK2, zwischen denen ein Phasenschieberabschnitt PSA angeordnet ist. Auch hier liegt die Besonderheit darin, daß die beiden Wellenleiter WL1 und WL2 erfindungsgemäße Rippenwellenleiter mit jeweils einem über die ganze Länge der betreffenden Rippe sich erstreckenden pn- oder pin-Übergang sind, der beispielsweise im Koppelbereich des Richtkopplers RK1 und/oder Phasenschieberbereich PSA elektrisch kontaktiert ist. Die auf den Rippen der Rippenwellenleiter aufgebrachten Kontaktelektroden sind in der Figur 3 mit K1 bis K4 bezeichnet.

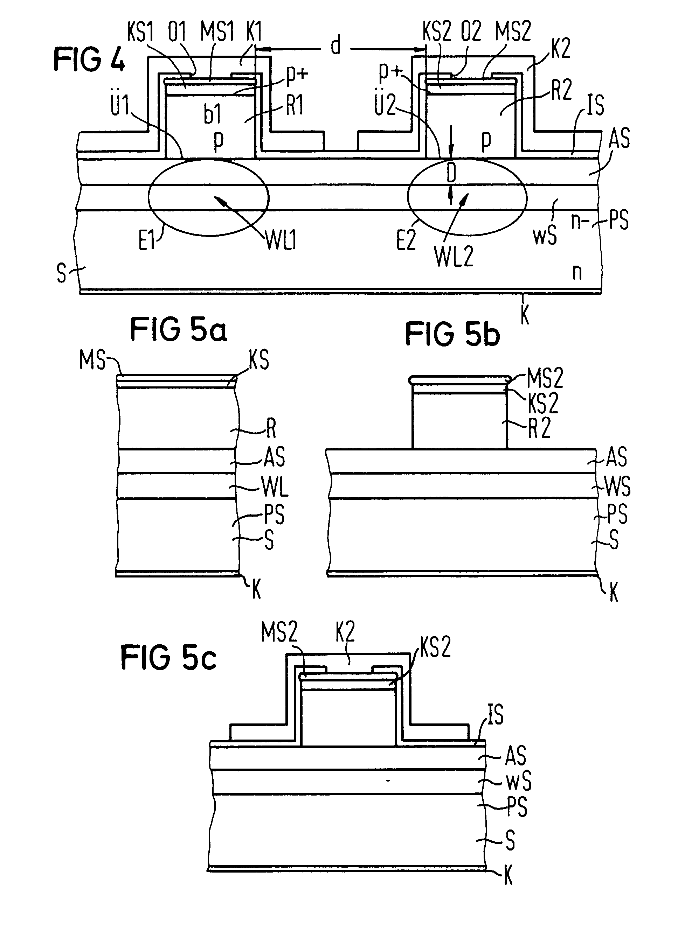

Nach dem in Figur 4 stellvertretend für andere erfindungsgemäße Anordnungen gezeigten detaillierten Aufbau des Richtkopplers nach den Figuren 1 und 2 weist das n-dotierte Substrat S aus InP eine geringer n-dotierte Pufferschicht PS aus InP auf, auf der eine wellenleitende Schicht wS aus InGaAsP aufgebracht ist. Diese Schicht wS sollte möglichst undotiert sein. In der Praxis läßt sich dies aus herstellungstechnischen Gründen nicht oder nur schwer erreichen und es muß mit einer ungewollt dotierten Schicht wS vorlieb genommen werden. Diese Dotierung sollte eine möglichst geringe n-Dotierung sein und darf keinesfalls eine p-Dotierung sein. Auf der wellenleitenden Schicht wS ist eine Abstandsschicht AS aus InGaAsP aufgebracht, die ebenfalls undotiert oder aus den gleichen Gründen wie bei der wellenleitenden Schicht wS allenfalls möglichst gerinfügig n-dotiert sein sollte, keinesfalls aber p-dotiert sein darf. Diese Abstandsschicht AS muß eine kleinere Brechzahl aufweisen als die wellenleitende Schicht wS.

Auf der Abstandsschicht AS sind p-dotierte Rippen R1 und R2 aus InP aufgebracht, deren Längsrichtung senkrecht zur Zeichenebene ist. Jede Rippe R1 bzw. R2 definiert zusammen mit der darunterliegenden wellenleitenden Schicht wS einen Wellenleiter WL1 bzw. WL2, dessen Querschnittsbereich etwa durch die geschlossene Kurve E1 bzw. E2 begrenzt ist, d.h. ein geführter optische Mode wird im wesentlichen innerhalb der betreffenden Kurve E1 bzw. E2 und in der wellenleitenden Schicht wS geführt.

Der Ubergang Ü1 bzw. Ü2 vom p-dotierten Material der Rippe R1 bzw. R2 zum n-dotierten oder undotierten Material der Abstandsschicht AS ist in dem der Dicke dieser Schicht AS entsprechenden Abstand D von der wellenleitenden Schicht wS angeordnet.

Auf jeder Rippe R1 und R2 ist eine elektrisch isolierende Schicht IS aufgebracht, in der zumindest dort, wo die Rippe R1 bzw. R2 elektrisch zu kontaktieren ist, ein Kontaktfenster 01 bzw. 02 ausgespart ist. Zur besseren Kontaktierung weist jede Rippe R1 und R2 an der Oberseite eine p⁺-dotierte Schicht KS1 bzw. KS2 aus InGaAs auf, auf der eine Schicht MS1 bzw. MS2 aus Metall aufgebracht ist. Diese Schicht MS1 bzw. MS2 steht im Bereich des betreffenden Kontaktfensters 01 bzw. 02 mit einer auf die elektrisch isolierende Schicht IS aufgebrachten Kontaktelektrode K1 bzw. K2 aus Metall in Kontakt. Die Gegenelektrode K zu diesen Kontaktelektroden K1 und K2 ist auf der Unterseite des n-dotierten Substrats S aufgebracht. Der Abstand zwischen den Wellenleitern WL1 und WL2 ist im wesentlichen gleich dem Abstand d zwischen den Rippen R1 und R2.

Bei einem bevorzugten konkreten Ausführungsbeispiel der Anordnung nach Figur 4 beträgt die Dicke des n-dotierten Substrats S etwa 100 µm und seine n-Dotierung etwa 5.10¹⁸/cm³. Die Pufferschicht PS hat eine Dicke von etwa 3 µm und eine n-Dotierung von etwa 10¹⁷/cm³. Die wellenleitende Schicht wS und die Abstandsschicht AS haben jeweils eine Dicke von etwa 0,4 µm und jeweils eine n-Dotierung von höchstens etwa 10¹⁶/cm³. Das quaternäre Material der wellenleitenden Schicht wS hat eine Gap-Wellenlänge λ_{g} von etwa 1,30 µm, das der Abstandsschicht AS eine Gap-Wellenlänge λ_{g} von etwa 1,05 µm. Jede Rippe R1 und R2 weist eine Dicke von etwa 1,5 µm, eine Breite von etwa 3 µm und eine p-Dotierung von etwa 2.10¹⁷/cm³ auf. Ihr Abstand d im Koppelbereich L beträgt 3 etwa µm. Die Dicke jeder p⁺-dotierten Schicht KS1 und KS2 beträgt etwa 0,2 µm und ihre p⁺-Dotierung ist größer als 10¹⁹/cm. Jede Schicht MS1 und MS2 aus Metall besteht aus Ti/Pt oder Ti/Au, jede Kontaktelektrode K1 und K2 aus Au oder Ti/Au und die Gegenelektrode K aus AuGe/Ni/Au. Die elektrisch isolierende Schicht IS besteht aus Al₂O₃.

Der Koppelbereich L ist etwa 980 µm lang und die Gesamtlänge des Richtkopplers beträgt etwa 2 mm. Der seitliche Versatz der Wellenleiter (siehe Figur 1) beträgt etwa 20 µm und ihr Krümmungsradius r 10 mm. Die laterale effektive Brechzahldifferenz Δn_{eff} jedes Wellenleiters beträgt etwa 5.10⁻³.

Das konkrete Ausführungsbeispiel kann beispielsweise mit einer Betriebswellenlänge λ von etwa 1,56 µm und mit einem extrem niedrigen Betriebsstrom von etwa 4 mA betrieben werden und weist in beiden Schaltzuständen einen Einfügeverlust von nur etwa 1,3 dB auf.

Das erfindungsgemäße Verfahren zur Herstellung einer erfindungsgemäßen Anordnung wird am Beispiel der Herstellung des vorstehend beschriebenen konkreten Ausführungsbeispiels anhand der Figuren 5a bis 5c näher beschrieben.

Der in Figur 5a bruchstückhaft dargestellte Ausgangskörper wird wie folgt hergestellt: Auf ein n-dotiertes Substrat S aus InP in Form eines Wafers mit einer geringer n-dotierten Pufferschicht PS an der Oberseite werden mittels Flüssigphasenepitaxie nacheinander die wellenleitende Schicht wS aus InGaAsP, die Abstandsschicht AS aus InGaAsP und eine p-dotierte Schicht R aus InP aufgewachsen. An der Oberfläche der Schicht R wird eine p⁺-dotierte Schicht KS aus InGaAs erzeugt. Danach wird das Substrat S auf etwa 100 µm Dicke heruntergebracht. Auf der Unterseite des Substrats S wird zur Bildung der Gegenelektrode K AuGe/Ni/Au aufgedampft und legiert. Auf die p⁺-dotierte Schicht KS wird zur Bildung einer Schicht MS aus Metall eine etwa 15 nm dünne Schicht aus Ti und eine etwa 500 nm dünne Schicht aus Pt oder Au aufgebracht, mit denen der p-Kontakt gebildet wird.

Die Rippen R1 und R2 der Rippenwellenleiter werden dadurch hergestellt, daß zunächst ein Materialabtrag mittels Ionen vorgenommen wird, bei dem sowohl die dünne Schicht MS aus Metall als auch die p⁺-dotierte Schicht KS durchtrennt wird. Bei diesem Prozeßschritt kann Photoresist als Maske verwendet werden, weil die Ätztiefe nur 0,3 µm beträgt. Dann wird das freigelegte p-dotierte InP-Material durch naßchemisches Ätzen bis auf die Abstandsschicht AS herab entfernt. Dabei wird selektiv geätzt, wobei der Ätzvorgang vorteilhafterweise an der als Ätzstoppschicht fungierenden Abstandsschicht AS von selbst zum stehen kommt und Rippen mit nahezu vertikalen Seitenwänden stehenbleiben, wenn diese längs der [011]-Richtung ausgerichtet sind. Die Figur 5b zeigt bruchstückhaft die nach diesem Verfahrensschritt entstandene Zwischenstufe, wobei beispielsweise nur die Rippe R1 gezeigt ist.

Danach wird eine etwa 0,3 µm dicke Isolierschicht IS aus Al₂O₃ auf die rippenseitige Substratoberfläche zum Isolieren der Rippen gegen die Kontaktelektroden aufgesputtert. Auf der Oberseite der Rippen werden Kontaktfenster von etwa 1 µm Breite, darunter das Kontaktfenster 02, mittels Projektionslithographie und chemischen Ätzens geöffnet. Dann wird auf die Isolierschicht IS und die in den Kontaktfenstern freiliegende Schicht aus Ti/Pt, darunter die Schicht MS2, eine Schicht aus Au oder Ti/Au thermisch aufgedampft und daraus die Kontaktelektroden, darunter die Kontaktelektrode K2 durch einen Abhebeprozeß strukturiert. Nach diesem Verfahrensschritt ist die in Figur 5c bruchstückhaft dargestellte Endstufe entstanden, die den fertigen Richtkoppler bildet.

## Patentansprüche

1. Integriert-optische Anordnung mit wenigstens einem auf einem Substrat (S) aus Halbleitermaterial integrierten streifenförmigen optischen Wellenleiter (WL1, WL2), wobei der Wellenleiter (WL1, WL2) aus einem durch eine undotierte oder n-dotierte wellenleitende Schicht (wS) des Substrats (S) und einer über dieser Schicht (wS) ausgebildeten Rippe (R1, R2) aus Halbleitermaterial definierten Rippenwellenleiter (wS, R1; wS, R2) besteht, und wobei im Bereich des Rippenwellenleiters (wS, R1; wS, R2), ober- oder unterhalb der wellenleitenden Schicht (wS) ein von außen kontaktierbarer Übergang (Ü1, Ü2) von p-dotiertem zu n-dotiertem Material (pn-Übergang) oder von p-dotiertem zu undotiertem und von undotiertem zu n-dotiertem Material (pin-Übergang) derart integriert ist, daß der Übergang (Ü1, Ü2) vom p-dotierten zum n-dotierten oder undotierten Material in einem Abstand (D) von der wellenleitenden Schicht (wS) und das p-dotierte Material auf der von dieser Schicht (wS) abgekehrten Seite dieses Übergangs (Ü1, Ü2) angeordnet ist,
**dadurch gekennzeichnet,**
daß der Abstand (D) zwischen dem Übergang (Ü1, Ü2) vom p-dotierten zum n-dotierten oder undotierten Material und der wellenleitenden Schicht (wS) kleiner als die Diffusionslänge von in diese Schicht (wS) bei in Durchlaßrichtung betriebenem Übergang (Ü1, Ü2) vom p-dotierten zum n-dotierten oder undotierten Material injizierten elektrischen Ladungsträgern gewählt ist.

2. Anordnung nach Anspruch 1,
**dadurch gekennzeichnet,**
daß das p-dotierte Material in der Rippe (R1, R2) und das n-dotierte Material zumindest unterhalb der wellenleitenden Schicht (wS) im Substrat (S) enthalten ist.

3. Anordnung nach Anspruch 1 oder 2,
**dadurch gekennzeichnet,**
daß die Rippe (r1, R2) und das Substrat (S) aus InP und die wellenleitende Schicht (wS) aus InGaAsP besteht, und daß im Abstand (D) zwischen dem Übergang (Ü1, Ü2) vom p-dotierten zum n-dotierten oder undotierten Material und der wellenleitenden Schicht (wS) InGaAsP mit einer im Vergleich zum Material der wellenleitenden Schicht (wS) kleineren Brechzahl enthalten ist.

4. Anordnung nach einem der vorhergehenden Ansprüche,
**dadurch gekennzeichnet,**
daß auf dem Substrat (S) zwei abschnittsweise in einem derart geringen Abstand (D) nebeneinander verlaufende Rippenwellenleiter (WL1, WL2) integriert sind, daß ein in einem Rippenwellenleiter (WL1 oder WL2) geführter optischer Mode seitlich in den anderen Rippenwellenleiter (WL2 bzw. WL1) überkoppeln kann, wobei jeder Rippenwellenleiter (WL1, WL2) durch eine n-dotierte oder undotierte wellenleitende Schicht (wS) des Substrats (S) und durch jeweils eine über dieser Schicht (wS) ausgebildeten Rippe (R1 bzw. R2) aus dem Halbleitermaterial definiert ist, wobei im Bereich jedes Rippenwellenleiters (WL1, WL2) ober- oder unterhalb der wellenleitenden Schicht (wS) je ein von außen kontaktierbarer, über die ganze Länge der Rippe (R1, R2) sich erstreckender pn- oder pin-Übergang derart integriert ist, daß der Übergang (Ü1, bzw. Ü2) vom p-dotierten zum n-dotierten oder undotierten Material in einem Abstand (D) von der wellenleitenden Schicht (wS) und das p-dotierte Material auf der von dieser Schicht (wS) abgekehrten Seit dieses Übergang (Ü1 bzw. Ü2) angeordnet ist, und wobei der pn- oder pin-Übergang wenigstens eines Rippenwellenleiters (WL1, WL2) abschnittsweise kontaktiert ist.

5. Verfahren zur Herstellung einer Anordnung nach Anspruch 2 oder Anspruch 2 und Anspruch 3 oder 4, bei dem ein Ausgangskörper in Form eines Substrats (S) aus n-dotiertem Halbleitermaterial, auf dem eine n-dotierte oder undotierte wellenleitende Schicht (wS), darauf eine n-dotierte oder undotierte Abstandsschicht (AS) und darauf eine Schicht (R) aus p-dotiertem Halbleitermaterial aufgebracht sind, verwendet wird, daß die p-dotierte Schicht (R) bis auf die Abstandsschicht (AS) derart abgetragen wird, daß eine oder mehrere Rippen (R1, R2) aus p-dotiertem Material stehen bleiben, welche den oder die Struktur aus Rippenwellenleitern (WL1, WL2) definieren, daß die Rippen (R1, R2) mit einer elektrisch isolierenden Schicht (IS) abgedeckt werden, in der für jede zu kontaktierende Rippe (R1, R2) ein Kontaktfenster (01, 02) ausgespart wird, und daß auf die Rippen (R1, R2) eine elektrische Kontaktelektrode (K1, K2) aufgebracht wird, die eine auf dem n-dotierten Substrat (S) aufgebrachte Gegenkontaktelektrode (K) hat, wobei die Dicke der Abstandsschicht so gewählt wird,
daß der Abstand (D) zwischen dem Übergang (Ü1, Ü2) vom p-dotierten zum n-dotierten oder undotierten Material und der wellenleitenden Schicht (wS) kleiner als die Diffusionslänge von in diese Schicht (wS) bei in Durchlaßrichtung betriebenem Übergang (Ü1, Ü2) vom p-dotierten zum n-dotierten oder undotierten Material injizierten elektrischen Ladungsträgern gewählt ist.

## Claims

1. Integrated optical array having at least one strip-shaped optical waveguide (WL1, WL2) which is integrated on a substrate (S) made of semiconductor material, the waveguide (WL1, WL2) being composed of a rib waveguide (wS, R1; wS, R2) defined by an undoped or n-doped, wave-guiding layer (wS) of the substrate (S) and a rib (R1, R2) which is formed over this layer (wS) and is made of semiconductor material, a junction (Ü1, Ü2) from p-doped to n-doped material (pn junction) or from p-doped to undoped and from undoped to n-doped material (pin junction), which junction can be contacted from the outside, being integrated in the region of the rib waveguide (wS, R1; wS, R2) above or below the wave-guiding layer (wS) in such a way that the junction (Ü1, Ü2) from the p-doped material to the n-doped or undoped material is arranged at a distance (D) from the wave-guiding layer (wS) and the p-doped material is arranged on the side of this junction (Ü1, Ü2) which is turned away from this layer (wS), characterized in that the distance (D) between the junction (Ü1, Ü2) from the p-doped material to the n-doped or undoped material and the wave-guiding layer (wS) is selected to be smaller than the diffusion length of electrical charge carriers injected into this layer (wS) when the junction (Ü1, Ü2) from the p-doped material to the n-doped or undoped material is operated in the forward direction.

2. Arrangement according to Claim 1, characterized in that the p-doped material in the rib (R1, R2) and the n-doped material is contained at least underneath the wave-guiding layer (wS) in the substrate (S).

3. Arrangement according to Claim 1 or 2, characterized in that the rib (R1, R2) and the substrate (S) is composed of InP and the wave-guiding layer (wS) is composed of InGaAsP, and that InGaAsP with a refractive index which is smaller than that of the material of the wave-guiding layer (wS) is contained in the distance (O) between the junction (Ü1, Ü2) from the p-doped material to the n-doped or undoped material and the wave-guiding layer (wS).

4. Arrangement according to one of the preceding claims, characterized in that two rib waveguides (WL1, WL2) which are integrated on the substrate (S) run next to one another in certain sections at such a small distance (D) that an optical mode which is guided in a rib waveguide (WL1 or WL2) can transfer sideways to the other rib waveguide (WL2 or WL1), each rib waveguide (WL1, WL2) being defined by an n-doped or undoped, wave-guiding layer (wS) of the substrate (S) and by means of in each case one rib (R1 or R2) which is formed over this layer (wS) and is made of the semiconductor material, in each case one pn junction or pin junction which can be contacted from the outside and which extends over the entire length of the rib (R1, R2) being integrated in the region of each rib waveguide (WL1, WL2) above or below the wave-guiding layer (wS), in such a way that the junction (Ü1 or Ü2) from the p-doped material to the n-doped or undoped material is arranged at a distance (D) from the wave-guiding layer (wS) and the p-doped material is arranged on the side of this junction (Ü1 or Ü2) which is turned away from this layer (wS), and contact being made, in certain sections, with the pn junction or pin junction of at least one rib waveguide (WL1, WL2).

5. Method for manufacturing an array according to Claim 2 or Claims 2 and Claim 3 or 4, in which an initial body in the form of a substrate (S) made of n-doped semiconductor material, on which an n-doped or undoped, wave-guiding layer (wS) and on this an n-doped or undoped spacing layer (AS) and on this a layer (R) made of p-doped semiconductor material, are applied, is used, in which the p-doped layer (R) is eroded as far as the spacing layer (AS) in such a way that one or more ribs (R1, R2) made of p-doped material remain and define the structure made of rib waveguides (WL1, WL2), in which method the ribs (R1, R2) are covered with an electrically insulating layer (IS), in which a contact window (01, 02) is cut out for each rib (R1, R2) with which contact is to be made, and in which an electrical contact electrode (K1, K2) is applied to the ribs (R1, R2), which contact electrode (K1, K2) has a corresponding contact electrode (K) which is applied to the n-doped substrate (S), the thickness of the spacing layer being selected such that the distance (D) between the junction (Ü1, Ü2) from the p-doped material to the n-doped or undoped material and the wave-guiding layer (wS) is selected to be smaller than the diffusion length of the electrical charge carriers injected into this layer (wS) when the junction (Ü1, Ü2) from the p-doped material to the n-doped or undoped material is operated in the forward direction.

## Revendications

1. Dispositif optique intégré avec au moins un guide d'ondes (WL1, WL2) optique intégré en forme de bande sur un substrat (S) semi-conducteur, pour lequel le guide d'ondes (WL1, WL2) est constitué d'un guide d'ondes à nervures (wS, R1; wS, R2) défini par une couche guide d'ondes (wS) du substrat (S) non dopée ou dopée n et par une nervure (R1, R2) en matériau semi-conducteur formée sur cette couche (wS), et pour lequel est intégrée dans le domaine du guide d'ondes à nervures (wS, R1; wS, R2), au dessus ou en dessous de la couche guide d'ondes (wS), une jonction (Ü1, Ü2) contactable de l'extérieur du matériau dopé p au matériau dopé n ponction p-n) ou du matériau dopé p au matériau non dopé et du matériau non dopé au matériau dopé n ponction p-i-n), de telle façon que la jonction (Ü1, Ü2) du matériau dopé p au matériau dopé n ou non dopé est disposée à une distance (D) de la couche guide d'ondes (wS) et que le matériau dopé p est disposé sur la face de cette jonction (Ü1, Ü2) opposée à cette couche (wS),
caractérisé en ce que la distance (D) entre la jonction (Ü1, Ü2) du matériau dopé p au matériau dopé n ou non dopé et la couche guide d'ondes (wS) est choisie plus petite que la longueur de diffusion des porteurs de charges électriques injectés dans cette couche (wS) lors de l'utilisation en sens passant de la jonction (Ü1, Ü2) du matériau dopé p au matériau dopé n ou non dopé.

2. Dispositif selon la revendication 1, caractérisé en ce que le matériau dopé p est contenu dans la nervure (R1, R2) et en ce que le matériau dopé n est contenu dans le substrat (S) au moins en dessous de la couche guide d'ondes (wS).

3. Dispositif selon la revendication 1 ou 2, caractérisé en ce que la nervure (R1, R2) et le substrat (S) sont constitués de lnP et la couche guide d'ondes (wS) de lnGaAsP, et en ce que dans la distance (D) entre la jonction (Ü1, Ü2) du matériau dopé p au matériau dopé n ou non dopé et la couche guide d'ondes (wS) est contenu du lnGaAsP avec un plus petit indice de réfraction en comparaison avec le matériau de la couche guide d'ondes (wS).

4. Dispositif selon l'une des revendications précédentes, caractérisé en ce que sont intégrés sur le substrat (S) deux guides d'ondes à nervures (WL1, WL2) qui s'étendent l'un à coté de l'autre par tronçons avec une distance (D) tellement faible qu'un mode optique conduit dans un guide d'ondes à nervures (WL1 ou WL2) peut surcoupler latéralement dans l'autre guide d'ondes à nervures (WL2 respectivement WL1), chaque guide d'ondes à nervures (WL1, WL2) étant constitué d'une couche (wS) guide d'ondes du substrat (S) dopée n ou non dopée et à chaque fois d'une nervure (R1 respectivement R2) formée à partir du semi-conducteur au dessus de cette couche (wS), une jonction p-n ou p-i-n s'étendant sur toute la longueur de la nervure (R1, R2) et contactable de l'extérieur étant intégrée dans le domaine de chaque guide d'ondes à nervures (WL1, WL2), au dessus ou en dessous de la couche (wS) guide d'ondes, de telle façon que la jonction (Ü1 respectivement Ü2) du matériau dopé p au matériau dopé n ou non dopé est disposée à une certaine distance (D) de la couche (wS) guide d'ondes et que le matériau dopé p est disposé sur la face de cette jonction (Ü1 respectivement Ü2) opposée à cette couche (wS), la jonction p-n ou p-i-n d'au moins un guide d'ondes à nervures (WL1, WL2) étant contactée par tronçons.

5. Procédé pour la fabrication d'un dispositif selon la revendication 2 ou la revendication 2 et la revendication 3 ou 4, pour lequel est utilisé un corps initial sous la forme d'un substrat (S) semi-conducteur dopé n, sur lequel sont appliquées une couche (wS) guide d'ondes dopée n ou non dopée, puis par dessus une couche d'espacement (AS) dopée n ou non dopée, et par dessus une couche (R) en matériau semi-conducteur dopée p, pour lequel la couche dopée p (R) est enlevée jusqu'à la couche d'espacement (AS) de telle façon qu'il reste une ou plusieurs nervures (R1, R2) en matériau dopé p, lesquelles définissent le ou la structure de guide d'ondes à nervures (WL1, WL2), pour lequel les nervures (R1, R2) sont recouvertes d'une couche électriquement isolante (IS) dans laquelle est réservée une fenêtre de contact (O1, O2) pour chaque nervure (R1, R2) à contacter, et pour lequel est appliquée sur les nervures (R1, R2) une électrode de contact électrique (K1, K2) qui a une contre électrode de contact (K) montée sur le substrat (S) dopé n, l'épaisseur de la couche d'espacement étant choisie de telle façon que la distance (D) entre la jonction (Ü1, Ü2) du matériau dopé p au matériau dopé n ou non dopé et la couche guide d'ondes (wS) est choisie plus petite que la longueur de diffusion des porteurs de charges électriques injectés dans cette couche (wS) lors de l'utilisation en sens passant de la jonction (Ü1, Ü2) du matériau dopé p au matériau dopé n ou non dopé.
